# EUROPÄISCHE PATENTSCHRIFT

(11) **EP 2 399 817 B1**
(45) Veröffentlichungstag und Bekanntmachung des Hinweises auf die Patenterteilung: **14.11.2018**
(21) Anmeldenummer: 11165689.8
(22) Anmeldetag: 11.05.2011
(51) Int. Cl.: B62M 6/40, B62H 3/02, B62M 6/90, B60L 11/18

(54) **Haltevorrichtung für ein elektrisch betriebenes Fahrzeug**
Clamping device for an eletrical vehicle
Dispositif de retenue pour véhicule électrique

(30) Priorität: 28.06.2010 DE 102010025279
(43) Veröffentlichungstag der Anmeldung: 28.12.2011
(73) Patentinhaber: RAFI GmbH & Co. KG, 88276 Berg (DE)
(72) Erfinder: Siegler, Ralf, 88281 Schlier (DE); Voth, Michael, 88214 Ravensburg (DE)
(74) Vertreter: Engelhardt, Volker

(56) Entgegenhaltungen:
- JP-A- 2000 013 916
- JP-A- 2003 079 006
- JP-A- 2003 118 671
- US-A- 6 150 794
- US-B1- 6 177 879

## Beschreibung

Die Erfindung bezieht sich auf eine Haltevorrichtung, durch die ein elektrisch angetriebenes Fahrzeug, insbesondere ein Fahrrad mit Elektromotor, an einer Wand, einem Boden oder einer Decke abgestützt ist nach dem Oberbegriff des Patentanspruches 1 oder auf einen Bausatz nach dem Oberbegriff des Patentanspruches 1 für eine solche Haltevorrichtung.

Derartige Haltevorrichtungen sind in einer Vielzahl von unterschiedlichen Konstruktionen seit langem bekannt. Diese Haltevorrichtungen weisen beispielsweise zwei parallele bogenförmige Haltestege auf, zwischen denen das Vorderrad eines Fahrrades einschiebbar und dort arretierbar ist, so dass das Fahrrad durch die Haltevorrichtung abgestützt ist. Solche Haltevorrichtungen können auch als Bügel an einer Decke angebracht sein, um das Vorder- oder Hinterrad des Fahrrades in den Haltebügel einzustecken, so dass das Fahrrad an der Decke hängend angebracht ist.

In der jüngeren Vergangenheit sind vermehrt Fahrräder mit Elektroantrieben erhältlich, durch die der Fahrkomfort dadurch verbessert ist, dass der Elektromotor als zusätzliche Antriebshilfe zuschaltbar ist. Der Elektromotor ist dabei fest am Rahmen des Fahrrades angebracht und steht in trieblicher Wirkverbindung mit dem Vorder- oder Hinterrad bzw. Kettenantrieb. Der Elektromotor wird über Akkumulatoren mit Strom versorgt. Die Akkumulatoren sind entweder in einer getrennten Ladestation aufzuladen oder sind am Rahmen des Fahrrades angebracht. Das Fahrrad ist dann neben einer Stromquelle zu positionieren, um eine elektrische Verbindung zwischen der Stromquelle und den Akkumulatoren des Elektroantriebes herstellen zu können. Aus der EP 0 741 441 A2 ist eine Ladestation für einen Akkumulator, der an einem Fahrzeug, insbesondere an einem Fahrrad befestigt ist und durch den ein an dem Fahrrad vorgesehener Elektromotor mit Spannung versorgt wird, offenbart. Die Befestigung des Fahrrades erfolgt dabei über einen vom Boden beabstandeten Haltearm, an dessen freien Ende ein klauenförmiger Bügel angebracht ist, in das beispielsweise das Sattelrohr des Fahrrades seitlich eingerastet werden kann. Somit ist das Fahrrad an dem Haltebügel zunächst abgestützt und fällt nicht um, denn der Haltebügel weist eine Verengung auf.

Die Versorgung der Akkumulatoren mit Spannung erfolgt dadurch, dass in dem Haltebügel eine Drahtwicklung, die eine Spule bildet, vorgesehen ist, durch die ein Magnetfeld erzeugt ist. Das Magnetfeld wirkt auf ein in dem Sattelrohr angeordnete Spule aus einer Drahtwicklung ein, so dass das Magnetfeld von dem Haltebügel auf die Spule in dem Sattelrohr des Fahrrades induktiv übertragen ist und somit der Akkumulator an dem Fahrrad mit Spannung versorgt wird, um diesen aufzuladen.

Als nachteilig bei einer solchen konstruktiven Ausgestaltung hat sich zum einen herausgestellt, dass die Fahrradabstützung nicht zuverlässig gewährleistet ist und dass zum anderen die Energieübertragung zwischen dem Haltebügel und dem Sattelrohr einen geringen Wirkungsgrad aufweist.

Die Abstützung des Fahrrades erfolgt über einen klauenförmigen Haltebügel, dessen beide freien Schenkel V-förmig zueinander verlaufen, um eine Engstelle zu schaffen, durch die das Sattelrohr des Fahrrades einzupressen bzw. aus dieser herauszuziehen ist. Nachdem Fahrräder unterschiedlich groß bemessene Durchmesser von Sattelrohren aufweisen, sind diese verschiedenartigen Größenverhältnisse dafür verantwortlich, dass die Abstände der freien Schenkel des Haltebügels an diese anzupassen sind, um solche unterschiedlich großen Sattelrohre überhaupt aufnehmen zu können. Darüber hinaus verlieren die freien Schenkel des Haltebügels nach mehrmaligem Gebrauch ihre Vorspannkraft und werden voneinander weggebogen. Es ist daher ohne weiteres denkbar, dass ein Fahrrad aus dem Haltearm herausfällt, wenn der Abstand zwischen den Haltearmen derart groß ist, dass das Sattelrohr durch dieses hindurchpasst.

Darüber hinaus ist auch der Ladevorgang mit einem geringen Wirkungsgrad behaftet, denn der innere Durchmesser des Haltebügels ist derart auszugestalten, dass unterschiedlich groß bemessene Sattelrohre in diesen eintauchen können. Dies bedeutet jedoch, dass der Abstand zwischen der Innenseite des Haltebügels und der Außenseite des Sattelrohres derart groß bemessen ist, dass die induktive Übertragung des Magnetfeldes von der Spule in dem Haltebügel zu der Spule in dem Sattelrohr einem schlechten oder geringen Wirkungsgrad unterliegt, denn je größer ein solcher räumlicher Abstand ausgestaltet ist, desto geringer ist die Energieübertragung.
Ferner ist die Spulenwicklung in dem Haltebügel durch den für die Aufnahme des Stahlrohres notwendigen Freiraum unterbrochen. Dies führt dazu, dass das Magnetfeld in diesem Bereich nicht vorhanden ist und daher die induktive Spannungsübertragung erheblich beeinträchtigt ist.
Aus der US 2008/0034820 A1 ist eine Absperrvorrichtung bekanntgeworden, die dazu dient, ungenau positionierte Fahrräder zuverlässig gegen Diebstahl zu sichern.
Als nachteilig bei dieser Haltevorrichtung hat sich gezeigt, dass diese keine Bauteile aufweisen, mittels denen eine elektrische Energieübertragung zu den Akkumulatoren des Fahrzeuges herstellbar ist und dass diese Ladestationen vielmehr als separates Bauteil umständlich zu handhaben sind, um die Akkumulatoren nach dem Gebrauch erneut aufzuladen.

Der nächstliegende bekanntgewordene Stand der Technik ist dem Dokument JP2000013916 zu entnehmen. Es ist daher Aufgabe der Erfindung, eine Haltevorrichtung der eingangs genannten Gattung derart weiterzubilden, dass durch diese zum Einen eine zuverlässige Abstützung des Fahrzeuges erfolgt, um dieses auf möglichst einfache Art und Weise positionieren zu können und durch die Haltevorrichtung zuverlässig abgestützt ist und zum Anderen soll durch die Haltevorrichtung eine Energieübertragung an die an dem Fahrzeug angebrachten Akkumulatoren, während das Fahrzeug mit der Haltevorrichtung verbunden ist, möglich sein.
Diese Aufgaben sind erfindungsgemäß durch die Merkmale des kennzeichnenden Teils von Patentanspruch 1 gelöst.

Dadurch, dass in dem Arretierungskopf und in der Kupplung Spulen mit einer oder mehreren Wicklungen aus Metall vorgesehen sind, entsteht bei entsprechender Stromversorgung durch diese ein Magnetfeld, das zur induktiven Energieübertragung mit einem hohen Wirkungsgrad verwendet ist, denn die Abstände zwischen dem Arretierungskopf und der Kupplung weisen zwar ein gewisses Spiel auf, sind jedoch sehr gering. Folglich kann von einer Stromquelle über den Haltearm, den Arretierungskopf, die Kupplung und eine elektrische Zuleitung zwischen der Kupplung und den Akkumulatoren, die am Fahrzeug angebracht sind, Strom zur Aufladung der Akkumulatoren fließen, so dass die Akkumulatoren nach Gebrauch erneut aufgeladen werden können, ohne dass hierfür zusätzliche separat mitzuführende und anzuschließende Bauteile notwendig sind.

Gleichzeitig kann das Fahrzeug mit einer Hand gehalten und mit der anderen Hand der Haltearm heruntergedrückt werden, um eine Verbindung zwischen dem Haltearm und dem Fahrzeug herzustellen, denn sobald der Arretierungskopf in die Kupplung eingesetzt bzw. eingerastet ist, ist das Fahrrad durch den Haltearm zuverlässig abgestützt. Die Handhabung der Haltevorrichtung zur Positionierung des Fahrzeuges an der Haltevorrichtung ist demnach unkompliziert und kann auch von kraftlosen Menschen betätigt werden.

Vorteilhafterweise ist der Haltearm bezogen auf den Boden in seiner Höhe verstellbar, so dass ein Kräftegleichgewicht zwischen dem Haltearm und dem eingeschobenen Fahrrad entsteht, durch dass das Fahrrad zuverlässig gehalten ist.

Weitere vorteilhafte Weiterbildungen der Erfindung ergeben sich aus den Unteransprüchen.

In der Zeichnung ist ein erfindungsgemäßes Ausführungsbeispiel dargestellt, das nachfolgend näher erläutert ist. Im Einzelnen zeigt:
- Figur 1: eine Haltevorrichtung, die an einer Wand befestigt ist und die aus einem Haltearm besteht, der senkrecht von der Wand ragt und parallel zu dem Boden verlaufend ein Fahrrad abstützt, in perspektivischer Ansicht,
- Figur 2a: das Fahrrad gemäß Figur 1 mit einer lösbaren elektrischen Leitung zwischen einer am Fahrrad angebrachten Kupplung und einem Akkumulator zur Aufladung des Elektroantriebes des Fahrrades,
- Figur 2b: das Fahrrad gemäß Figur 1 mit einer in dem Rahmen des Fahrrades eingebauten elektrischen Zuleitung zwischen einer Kupplung und einem Akkumulator am Rahmen des Fahrzeuges,
- Figur 3: die Haltevorrichtung gemäß Figur 1, in vergrößerter und perspektivischer Darstellung,
- Figur 4a: die Haltevorrichtung gemäß Figur 2b, entlang der Schnittlinie IVa-IVa,
- Figur 4b: die Haltevorrichtung gemäß Figur 2a, entlang der Schnittlinie IVb-IVb,
- Figur 5a: die Haltevorrichtung gemäß Figur 2b, entlang der Schnittlinie Va-Va und
- Figur 5b: die Haltevorrichtung gemäß Figur 2a, entlang der Schnittlinie Vb-Vb.

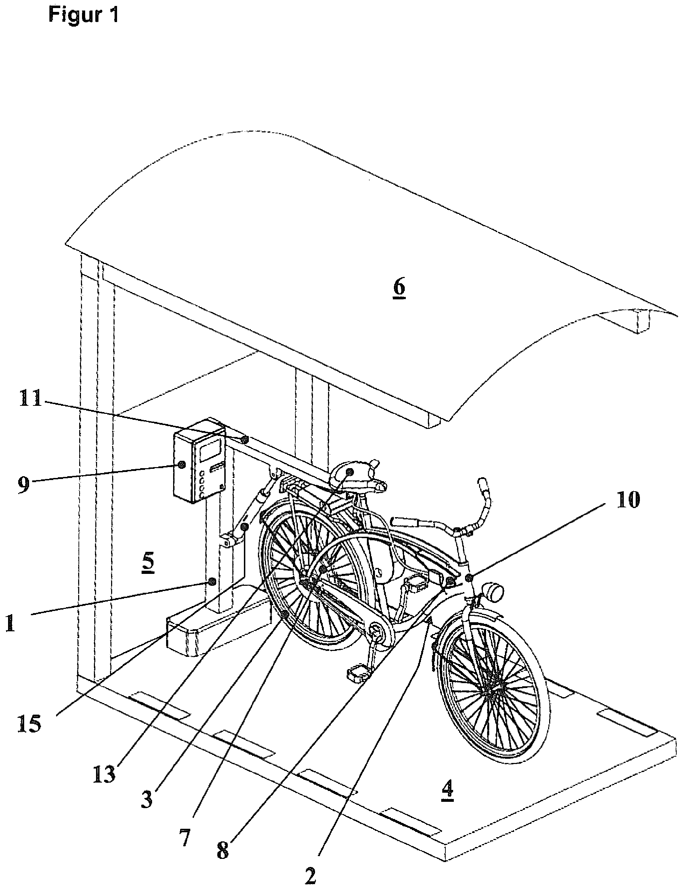

In Figur 1 ist eine Haltevorrichtung 1 zu entnehmen, die an einem Boden 4 oder einer Wand 5 ortsfest angebracht ist. Durch die Haltevorrichtung 1 soll ein Fahrrad 2 zuverlässig gehalten und gleichzeitig soll durch die Haltevorrichtung 1 eine Energieübertragung, insbesondere von Strom, möglich sein. Da das Fahrrad 2 einen Elektroantrieb 7 aufweist, der trieblich mit dem Hinterrad 3 des Fahrrades 2 verbunden ist und als zusätzliche Antriebshilfe zur Unterstützung des Pedalantriebes dient, ist die Antriebshilfe nach Bedarf mit Strom zu versorgen. Nach einer bestimmten Betriebsdauer sind die den Elektroantrieb 7 mit Strom versorgenden Akkumulatoren 8 entleert, so dass diese aufzuladen sind.

Die Kupplung des Elektroantriebes 7 kann auch an dem Vorderrad oder dem Pedalantrieb des Fahrrades 2 bewerkstelligt sein.

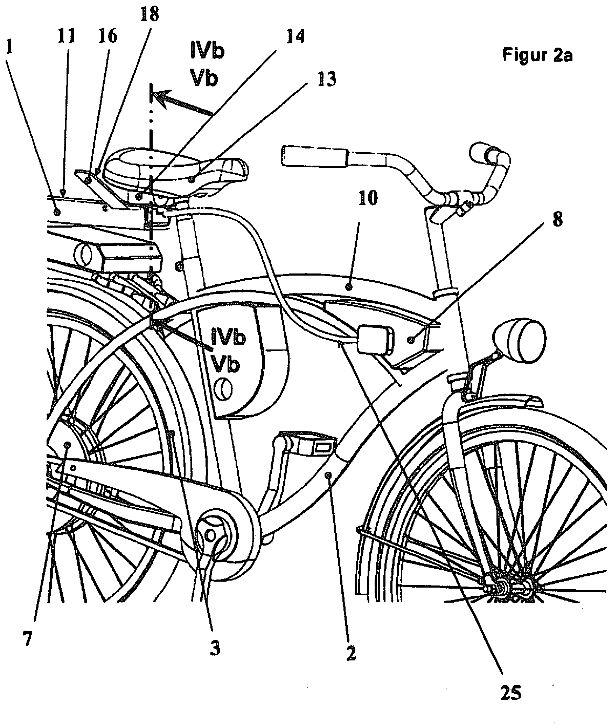

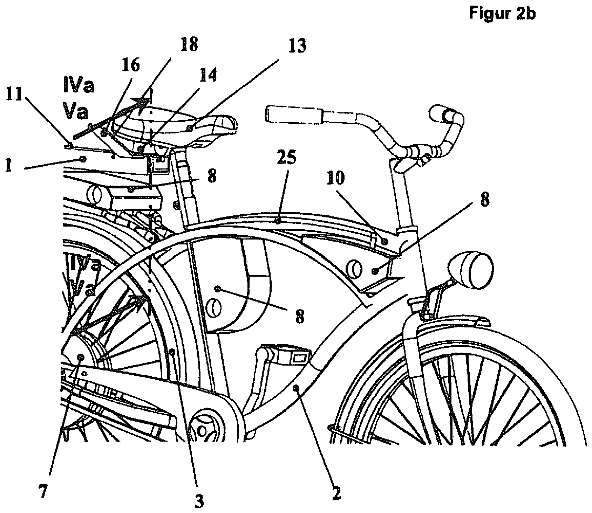

Den Figuren 2a und 2b ist zu entnehmen, dass die Akkumulatoren 8 an dem Fahrradrahmen 10 im Bereich des Lenkers befestigt sind. In Figur 2a ist gezeigt, dass die Akkumulatoren 8 mittels eines lösbar an diesem zu befestigenden Elektrokabels 25 an eine unterhalb des Fahrradsattels 13 vorgesehene Kupplung 14 angeschlossen sind. Die Kupplung 14 dient als Energieübertragungseinrichtung, so dass die Akkumulatoren 8 über die elektrische Leitung 25 mit Strom versorgbar und daher aufladbar sind, während das Fahrrad 2 in der Haltevorrichtung 1 eingestellt ist.

Die Akkumulatoren 8 können des Weiteren im Bereich des Sattels 13 oder des Gepäckträgers des Fahrrades 2 befestigt sein.

In Figur 2b ist gezeigt, dass die elektrische Leitung 25 in dem Fahrradrahmen 10 eingebaut und fest mit der Kupplung 14 und den Akkumulatoren 8 verbunden ist.

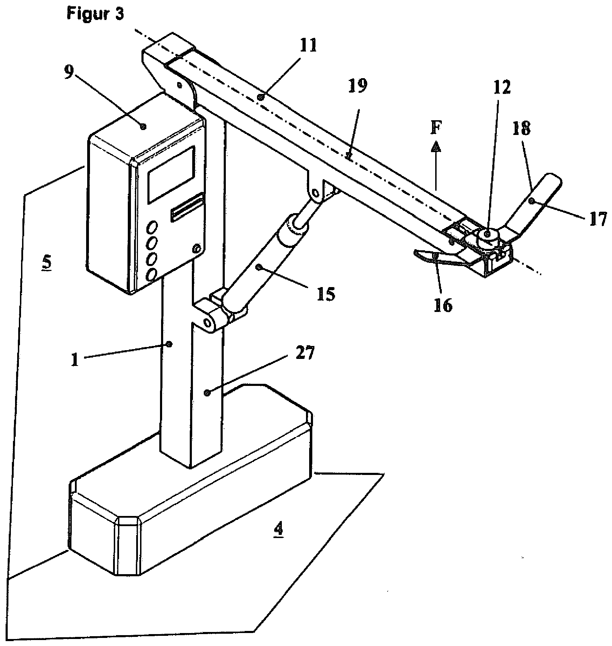

In Figur 3 ist der konstruktive Aufbau der Haltevorrichtung 1 zu entnehmen. Die Haltevorrichtung 1 besteht aus einem Haltearm 11, der parallel und beabstandet zu dem Boden 4 ausgerichtet ist. Darüber hinaus weist die Haltevorrichtung 1 eine Ladestation 9 auf, durch die elektrische Energie in einem an dem freien Ende des Haltearms 11 angebrachten und von diesem abstehenden Arretierungskopf 12 geleitet ist. Darüber hinaus ist zwischen einem Sockel 27 der Haltevorrichtung 1 und dem Haltearm 11 ein Druckkolben 15 vorgesehen, durch den der Haltearm 11 höhenverstellbar ist.

Seitlich benachbart zu dem Arretierungskopf 12 sind zwei Führungsarme 16 und 17 angebracht, die einen V-förmigen Trichter 18 bilden. Beim Einschieben des Fahrrades 2 kann demnach der Haltearm 11 mit einer Hand heruntergedrückt werden, so dass dieser aus der Horizontalen nach unten verneigt verläuft und das Fahrrad 2 kann rückwärts eingeschoben werden, so dass der Arretierungskopf 12 fluchtend zu der am Fahrradsattel 13 angebrachten Kupplung 14 gelangt. Durch Loslassen des Haltearms 11 rastet der Arretierungskopf 12 in die Kupplung 14 ein, so dass durch diese Wirkverbindung zunächst eine zuverlässige Abstützung des Fahrrades 2 durch den Haltearm 11 geschaffen ist.

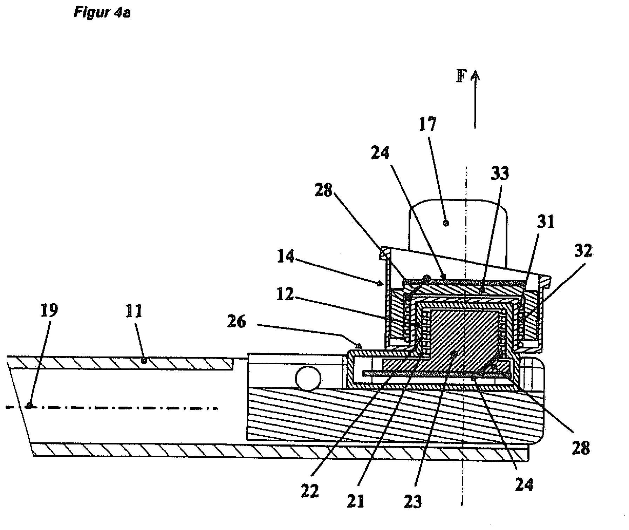

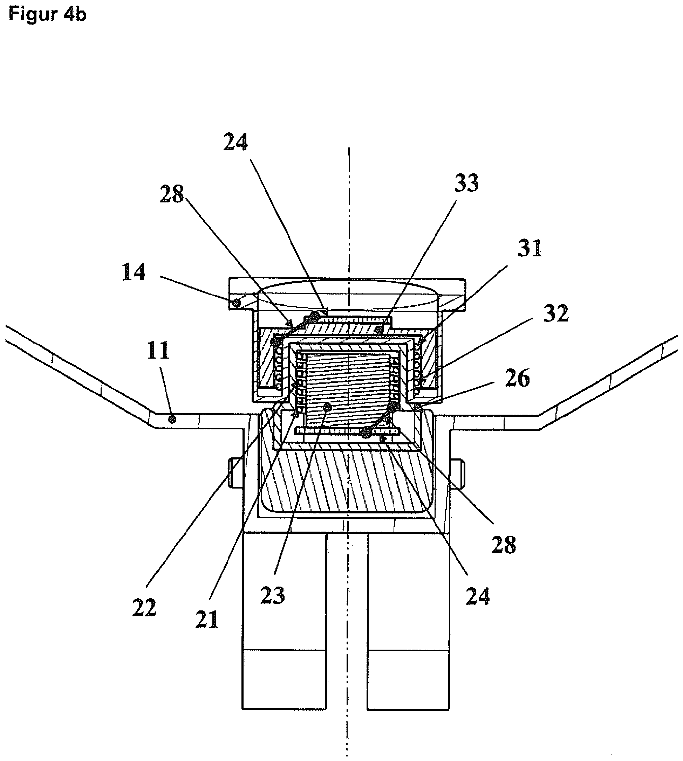

In den Figuren 4a und 4b ist eine Ausführungsvariante des Arretierungskopfes 12 und der Kupplung 14 zu entnehmen. Der Arretierungskopf 14 weist eine rechteckförmige Querschnittsform auf; die Außenkontur des Arretierungskopfes 12 ist rund. Im Inneren des Arretierungskopfes 12 ist eine Spule 21, die aus einer Vielzahl von Drahtwicklungen 22 und einem Eisenkern 23 besteht. Die Spule 21 ist über ein Elektrokabel 28 mit einer Leiterplatte 24 verbunden. Durch die Spule 21 fließt Strom, so dass ein Magnetfeld erzeugt ist, das von einer in der Kupplung 14 angeordneten Spule 31 mit einer Vielzahl von Drahtwicklungen 32 und einem Eisenkern 33 einwirkt und somit Strom bzw. elektrische Energie von der Spule 21 auf die Spule 31 der Kupplung 14 induktiv übertragen ist. Da die Spule 31 mit dem elektrischen Kabel 28 an eine Leiterplatte 24 angeschlossen ist, die in elektrischer Wirkverbindung mit den Akkumulatoren 8 steht, wird im eingerasteten Zustand zwischen dem Arretierungskopf 12 und der Kupplung 14 Strom an die Akkumulatoren 8 geleitet, so dass diese aufgeladen werden, um den Strom zu speichern, der dann für den Fahrradantrieb verwendet werden kann.

Mittels der Ladestation 9 kann der Ladezustand der Akkumulatoren 8 überprüft und gegebenenfalls die Stromversorgung unterbrochen werden.

Folglich ist das Fahrrad 2 an dem Haltearm 11 nicht nur fixiert, sondern gleichzeitig werden die an dem Fahrrad 2 angebrachten Akkumulatoren 8 mit Strom versorgt.

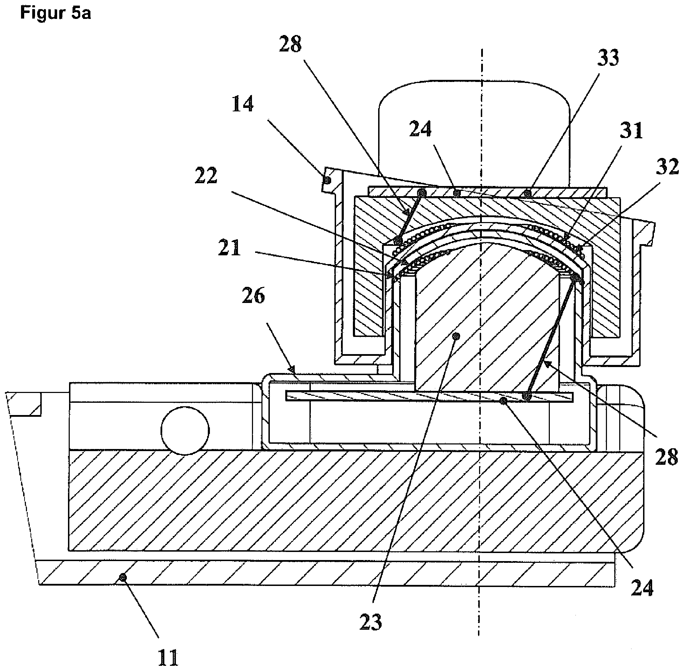

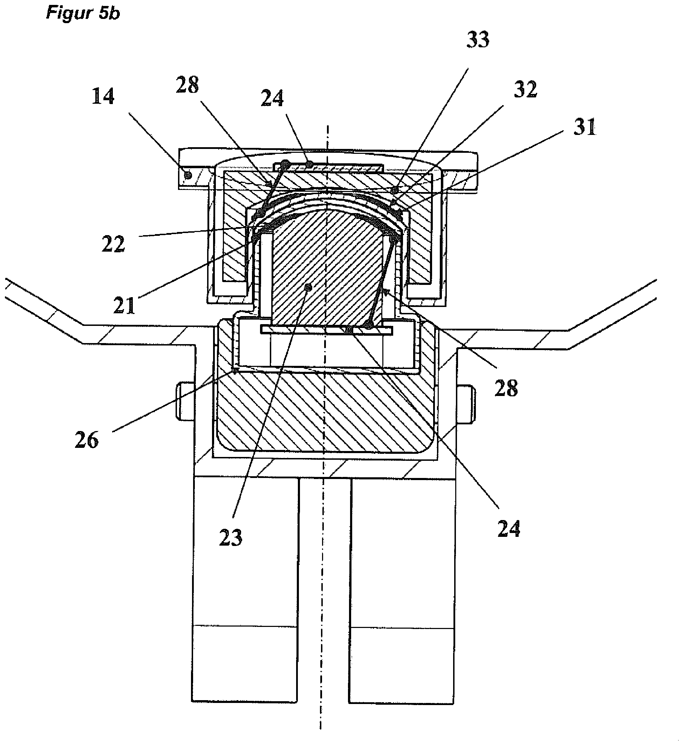

In den Figuren 5a und 5b ist der Arretierungskopf 12 und die Kupplung 14 andersartig ausgestaltet. Der Arretierungskopf 12 weist eine domförmige Außenkontur auf und die Innenkontur der Kupplung 12 ist konvex ausgestaltet und an die Außenkontur des Arretierungskopfes 12 angepasst. Zwischen der Außenkontur des Arretierungskopfes 12 und der Innenkontur der Kupplung 14 ist ein möglichst kleiner Luftspalt von etwa 0,1 bis 1 Millimeter vorzusehen, um die Einrastung des Arretierungskopfes 12 in die Kupplung 14 ohne Verklemmen und Verkanten zu ermöglichen.

Der Haltearm 11 übt eine Vorspannkraft F auf die Kupplung 14 aus, die vom Boden 4 vertikal weggerichtet ist. Es ist jedoch auch denkbar, dass der Haltearm 11 parallel zu dem Boden 4 verschwenkt werden kann, um das Fahrrad 2 seitlich abzustützen wenn nämlich die Kupplung 14, beispielsweise an dem Fahrradrahmen 10, seitlich nach außen ragend angebracht ist.

Die erfindungsgemäße Haltevorrichtung 1 ist als nachrüstbarer Bausatz ausgestaltet, so dass auch Fahrräder 2, die bislang keine Anschlussmöglichkeit für die erfindungsgemäße Haltevorrichtung 1 aufweisen, mit der Kupplung 14 ausgerüstet werden können. Der Bausatz der Haltevorrichtung 1 besteht im Wesentlichen aus dem Haltearm 11, der Ladestation 9, dem Sockel 27, dem Druckkolben 15 sowie dem Arretierungskopf 12, der an dem freien Ende des Haltearmes 11 bereits vormontiert ist. Darüber hinaus liegt der Haltevorrichtung 1 eine mit dem Arretierungskopf 14 sowohl hinsichtlich der induktiven elektrischen Energieübertragung als auch hinsichtlich der Fixierungs- und Arretierungsmöglichkeit bildende Kupplung 14 bei, die an dem Fahrrad 2 befestigt werden kann.

## Patentansprüche

1. Haltevorrichtung (1), durch die ein elektrisch angetriebenes Fahrzeug (2), an einem Boden (4), einer Wand (5) oder einer Decke (6) abgestützt ist, bestehend aus einem an dem Boden (4), der Wand (5) oder der Decke (6) befestigten Haltearm (11), der im Wesentlichen parallel und beabstandet zu dem Boden (4) ausgerichtet ist, aus einem senkrecht zu der Längsachse (19) des Haltearmes (11) an dessen freien Ende angebrachten Arretierungskopf (12), aus einer an dem Fahrzeug (2) vorgesehenen Kupplung (14), deren Innenkontur an die Außenkontur des Arretierungskopfes (12) derart angepasst ist, dass der Arretierungskopf (12) in die Kupplung einsetzbar, eingreifbar oder einrastbar ist, und aus einer in dem Arretierungskopf (12) und in der Kupplung (14) vorgesehenen und jeweils miteinander zusammenwirkende Energieübertragungseinrichtung (21, 22, 23 und 31, 32, 33),
**dadurch gekennzeichnet,**
**dass** der Arretierungskopf (12) im Querschnitt kuppel- oder domförmig oder rechteckig und die Innenkontur der Kupplung (14) im Querschnitt konvex oder rechteckig ausgestaltet ist, dass zwischen dem Arretierungskopf (12) und der Innenkontur der Kupplung (14) ein Luftspalt vorgesehen ist, der zwischen 0,1 und 1 Millimeter beträgt, und dass die Energieübertragungseinrichtungen (21, 22, 23 und 31, 32, 33) in dem Arretierungskopf (12) und in der Kupplung (14) als elektrisch betriebene magnetische Spulen (21, 31) ausgebildet sind, durch die induktiv elektrische Energie übertragen ist.

2. Haltevorrichtung nach Anspruch 1,
**dadurch gekennzeichnet,**
**dass** der Arretierungskopf (12) gegenüberliegend an der Oberfläche des Haltearmes (11) angebracht ist, die dem Boden (4) abgewandt ist, und dass an dem Fahrzeug (2) die Kupplung (14) in Richtung des Bodens (4) weisend angeordnet ist.

3. Haltevorrichtung nach Anspruch 2,
**dadurch gekennzeichnet,**
**dass** der Abstand des Haltearmes (11) bezogen auf den Boden (4) variabel einstellbar ist und/oder dass der Haltearm (11) parallel zu dem Boden (4) verschwenkbar ist, und dass der Haltearm (11) unter einer Vorspannkraft (F) in der Kupplung (14) des Fahrzeuges (2) eingesetzt ist und dass die Vorspannkraft (F) vertikal oder parallel zu dem Boden (4) verläuft.

4. Haltevorrichtung nach Anspruch 1,
**dadurch gekennzeichnet,**
**dass** an dem Fahrzeug (2) eine Energiespeichereinrichtung in Form von Akkumulatoren (8) angebracht ist und dass die Akkumulatoren (8) mittels einer elektrischen Leitung (25) mit der Kupplung (14) und der darin angeordneten Energieübertragungseinrichtung (31, 32, 33) verbunden sind.

5. Haltevorrichtung nach Anspruch 4,
**dadurch gekennzeichnet,**
**dass** die elektrische Leitung (25) in dem Fahrzeugrahmen (10) eingebaut ist und dass die elektrische Leitung (25) zwischen der Kupplung (14) und den Akkumulatoren (8) untrennbar befestigt ist.

6. Haltevorrichtung nach Anspruch 5,
**dadurch gekennzeichnet,**
**dass** die elektrische Leitung (25) zwischen der Energieübertragungseinrichtung (31, 32, 33) und den Akkumulatoren (8) lösbar mit diesen verbunden ist und außerhalb des Fahrzeugrahmens (10) angeordnet ist.

7. Haltevorrichtung nach einem der vorgenannten Ansprüche,
**dadurch gekennzeichnet,**
**dass** die Kupplung (14) an dem Fahrrad (2) auf der dem Boden (4) zugewandten Unterseite des Fahrradsattels (13) angeordnet ist.

8. Haltevorrichtung nach einem der vorgenannten Ansprüche,
**dadurch gekennzeichnet,**
**dass** seitlich neben dem Arretierungskopf (12) jeweils zwei nach außen abstehender Führungsarme (16, 17) vorgesehen sind und dass durch die beiden Führungsarme (16, 17) ein Trichter (18) gebildet ist, durch den die Kupplung (14) in Richtung des Arretierungskopfes (12) beim Einführungsvorgang geführt ist.

9. Haltevorrichtung nach einem der vorgenannten Ansprüche,
**dadurch gekennzeichnet,**
**dass** seitlich neben dem Arretierungskopf (12) eine umlaufende oder mehrere voneinander getrennte Anschlagflächen (26) vorgesehen ist bzw. sind, auf der oder auf denen die Stirnseite der Kupplung (14) in eingeschobenem Zustand aufliegt.

10. Nachrüstbarer Bausatz für eine Haltevorrichtung (1) nach einem der vorgenannten Ansprüche,
**dadurch gekennzeichnet,**
**dass** der Bausatz aus einem Haltearm (11), aus einem an dem Haltearm (11) angebrachten und von diesem abstehenden Arretierungskopf (12) und aus einer in den Arretierungskopf (12) einsetzbaren Kupplung (14) besteht und dass in dem Arretierungskopf (12) und in die Kupplung (14) jeweils eine elektrisch betriebene Spule (21, 31) eingebaut ist, durch die induktiv Energie übertragbar ist, dass der Arretierungskopf (12) im Querschnitt kuppel- oder domförmig oder rechteckig und die Innenkontur der Kupplung (14) im Querschnitt konvex oder rechteckig ausgestaltet ist, dass zwischen dem Arretierungskopf (12) und der Innenkontur der Kupplung (14) ein Luftspalt vorgesehen ist, der zwischen 0,1 und 1 Millimeter beträgt, und dass die Energieübertragungseinrichtungen (21, 22, 23 und 31, 32, 33) in dem Arretierungskopf (12) und in der Kupplung (14) als elektrisch betriebene magnetische Spulen (21, 31) ausgebildet sind, durch die induktiv elektrische Energie übertragen ist.

11. Bausatz nach Anspruch 10,
**dadurch gekennzeichnet,**
**dass** im montierten Zustand das dem Arretierungskopf (12) gegenüberliegende Ende des Haltearmes (11) ortsfest gehalten ist, und dass die Kupplung (14) an einem Fahrzeug (2) mit Elektromotor angebracht ist.

## Claims

1. A clamping device (1) by means of which an electrically driven vehicle is supported on a floor (4), wall (5) or ceiling (6), consisting of a holding arm (11) attached to the floor (4), wall (5) or ceiling (6) in which case the holding arm (11) is chiefly aligned in parallel to and at a distance from the floor (4), of a locking head (12) attached at right angles to the longitudinal axis (19) of the holding arm (11) on its free end, of a coupling (14) provided on the bicycle (2), the inner contour of the coupling (14) being adapted to the outer contour of the locking head (12) in such a way that the locking head (12) can be attached to the coupling (12) through an insertion, engagement or detent effect, and of an energy transfer device (21, 22, 23 and 31, 32, 33) provided in the locking head (12) and in the coupling (14), the parts of which interact with one another in each case,
**characterised in that**,
the locking head (12) has a cross section that is cupola or dome-shaped or rectangular and the inner contour of the coupling (14) has a convex or rectangular cross section, that between the locking head (12) and the inner contour of the coupling (14) there is an air gap which is between 0.1 and 1 millimetre in extent, and that the energy transfer devices (21, 22, 23 or 31, 32, 33) in the locking head (12) and in the coupling (14) are configured as electrically operated magnetic coils (21, 31) by means of which electrical energy is transferred inductively.

2. The clamping device in accordance with Claim 1,
**characterised in that**,
the locking head (12) is attached opposite on the surface of the holding arm (11) which is facing away from the floor (4), and that on the vehicle (2) the coupling (14) is arranged facing in the direction of the floor (4).

3. The clamping device in accordance with Claim 2,
**characterised in that**,
the distance of the holding arm (11) from the floor (4) can be variably adjusted and/or that the holding arm (11) can be swivelled parallel to the floor (4), and that the holding arm (11) is inserted in the coupling (14) of the vehicle subject to a preload force (F) and that the preload force (F) runs vertically or parallel to the floor (4).

4. The clamping device in accordance with Claim 1,
**characterised in that**,
an energy storage device in the form of rechargeable batteries (8) is attached to the vehicle (2) and that the rechargeable batteries (8) are connected to the coupling (14) and the energy transfer device (31, 32, 33) arranged therein by means of an electric cable (25).

5. The clamping device in accordance with Claim 4,
**characterised in that**,
the electrical cable (25) is installed in the vehicle frame (10) and that the electrical cable (25) is inseparably attached between the coupling (14) and the rechargeable batteries (8).

6. The clamping device in accordance with Claim 5,
**characterised in that**,
the electrical cable (25) between the energy transfer device (31, 32, 33) and the rechargeable batteries (8) can be disconnected from them and is arranged outside the vehicle frame (10).

7. The clamping device in accordance with one of the aforementioned claims,
**characterised in that**,
the coupling (14) is arranged on the bicycle (2) on the underside of the bicycle saddle (13) facing towards the floor (4).

8. The clamping device in accordance with one of the aforementioned claims,
**characterised in that**,
on the side next to the locking head (12) there are two guide arms (16, 17) each projecting outwards and that the two guide arms (16, 17) form a funnel (18) by means of which the coupling (14) is guided in the direction of the locking head (12) during the insertion procedure.

9. The clamping device in accordance with one of the aforementioned claims,
**characterised in that**,
on the side next to the locking head (12) there is a circumferential stop surface (26) or there are several stop surfaces (26) separated from one another, on which the face end of the coupling (14) rests when in the inserted condition.

10. A retrofittable kit for a clamping device in accordance with one of the aforementioned claims,
**characterised in that**,
the kit consists of a holding arm (11), of a locking head (12) attached to the holding arm (11) and projecting from it and of a coupling (14) that can be inserted in the locking head (12) and that an electrically operated coil (21, 31) is installed in the locking head (12) and in the coupling (14) by means of which coil (21, 31) energy can be transferred inductively, the locking head (12) has a cross section that is cupola or dome-shaped or rectangular and the inner contour of the coupling (14) has a convex or rectangular cross section, that between the locking head (12) and the inner contour of the coupling (14) there is an air gap which is between 0.1 and 1 millimetre in extent, and that the energy transfer devices (21, 22, 23 or 31, 32, 33) in the locking head (12) and in the coupling (14) are configured as electrically operated magnetic coils (21, 31) by means of which electrical energy is transferred inductively.

11. The kit in accordance with Claim 10,
**characterised in that**,
in the assembled condition, the end of the holding arm (11) opposite to the locking head (12) is held in a fixed location and that the coupling (14) is attached to a vehicle (2) with an electric motor.

## Revendications

1. Dispositif de retenue (1) pour l'appui d'un véhicule à entraînement électrique (2) sur un fond (4), une paroi (5) ou un plafond (6), comprenant un bras de retenue (11) fixé sur le fond (4), la paroi (5) ou le plafond (6) et orienté essentiellement parallèlement au fond (4) et espacé de celui-ci, une tête d'arrêt (12) prévue perpendiculairement à l'axe longitudinal (19) du bras de retenue (11) sur son extrémité libre, un accouplement (14) prévu sur le véhicule (2), dont le contour intérieur est adapté au contour extérieur de la tête d'arrêt (12) de sorte que la tête d'arrêt (12) se laisse insérer, engrener ou encliqueter dans l'accouplement (14), et des équipements de transmission d'énergie (21, 22, 23, et 31, 32, 33) disposés dans la tête d'arrêt (12) et dans l'accouplement (14) et collaborant respectivement l'un avec l'autre,
**caractérisé en ce que**
la section transversale de tête d'arrêt (12) a la forme d'une coupole ou d'un dôme ou rectangulaire et que la section transversale du contour intérieur de l'accouplement (14) est convexe ou rectangulaire, qu'entre la tête d'arrêt (12) et le contour intérieur de l'accouplement (14), il est prévu un entrefer d'entre 0,1 et 1 millimètre et que les équipements de transmission d'énergie (21, 22, 23, et 31, 32, 33) disposés dans la tête d'arrêt (12) et dans l'accouplement (14) sont conçus en tant que bobines magnétiques à actionnement électrique (21, 31) transmettant par induction de l'énergie électrique.

2. Dispositif de retenue d'après la revendication 1,
**caractérisé en ce que**
la tête d'arrêt (12) est prévue en face sur la surface du bras de retenue (11) éloignée du fond (4) et que l'accouplement (14) sur le véhicule (2) est monté donnant en direction du fond (4).

3. Dispositif de retenue d'après la revendication 2,
**caractérisé en ce que**
l'écartement du bras de retenue (11) référé au fond (4) se laisse varier et/ou que le bras de retenue (11) se laisse pivoter parallèlement au fond (4), et que le bras de retenue (11) est monté avec une prétension (F) dans l'accouplement (14) du véhicule (2), et que la prétension (F) agit en direction verticale ou parallèle par rapport au fond (4).

4. Dispositif de retenue d'après la revendication 1,
**caractérisé en ce que**
sur le véhicule (2), il est prévu un dispositif d'accumulation d'énergie sous la forme d'accumulateurs (8) et que les accumulateurs (8) sont raccordés à l'aide d'une ligne électrique (25) à l'accouplement (14) et à l'équipement de transmission d'énergie (31, 32, 33) disposé dans celui-ci.

5. Dispositif de retenue d'après la revendication 4,
**caractérisé en ce que**
la ligne électrique (25) est montée dans le cadre du véhicule (10) et que la ligne électrique (25) est montée de manière inséparable entre l'accouplement (14) et les accumulateurs (8).

6. Dispositif de retenue d'après la revendication 5,
**caractérisé en ce que**
la ligne électrique (25) entre l'équipement de transmission d'énergie (31, 32, 33) et les accumulateurs (8) est raccordée de manière séparable à ceux-ci et est disposée à l'extérieur du cadre du véhicule (10).

7. Dispositif de retenue d'après une des revendications précédentes,
**caractérisé en ce que**
l'accouplement (14) sur la bicyclette (2) est prévu sur la face inférieure de la selle (13) de la bicyclette donnant sur le fond (4).

8. Dispositif de retenue d'après une des revendications précédentes,
**caractérisé en ce que**
latéralement à côté de la tête d'arrêt (12), il est prévu respectivement deux bras de guidage (16, 17) saillant vers l'extérieur et que les deux bras de guidage (16, 17) forment une trémie (18) par laquelle l'accouplement (14) est guidé, lors de l'introduction, en direction de la tête d'arrêt (12).

9. Dispositif de retenue d'après une des revendications précédentes,
**caractérisé en ce que**
latéralement à côté de la tête d'arrêt (12), il est prévu une surface de butée périphérique ou plusieurs surfaces de butée individuelles (26), sur laquelle ou lesquelles porte la face frontale de l'accouplement (14) introduit.

10. Kit complémentaire pour un dispositif de retenue (1) d'après une des revendications précédentes,
**caractérisé en ce que**
le kit comprend un bras de retenue (11), une tête d'arrêt (12) fixée sur le bras de retenue (11) et saillant de celui-ci, et d'un accouplement (14) se laissant insérer dans la tête d'arrêt (12), et que dans la tête d'arrêt (12) et dans l'accouplement (14), il est monté respectivement une bobine à actionnement électrique (21, 31) permettant de transmettre l'énergie par induction, que la section transversale de la tête d'arrêt (12) a la forme d'une coupole ou d'un dôme ou rectangulaire et que la section transversale du contour intérieur de l'accouplement (14) est convexe ou rectangulaire, qu'entre la tête d'arrêt (12) et le contour intérieur de l'accouplement (14), il est prévu un entrefer d'entre 0,1 et 1 millimètre, et que les équipements de transmission d'énergie (21, 22, 23, et 31, 32, 33) disposés dans la tête d'arrêt (12) et dans l'accouplement (14) sont conçus en tant que bobines magnétiques à actionnement électrique (21, 31) transmettant par induction de l'énergie électrique.

11. Kit complémentaire d'après la revendication 10,
**caractérisé en ce que**,
en état assemblée, l'extrémité du bras de retenue (11) opposée à la tête d'arrêt (12) est retenue en place et que l'accouplement (14) est monté sur un véhicule à moteur électrique (2).
